# EUROPEAN PATENT SPECIFICATION

(11) **EP 4 462 826 B1**
(45) Date of publication and mention of the grant of the patent: **24.06.2026**
(21) Application number: 23752916.9
(22) Date of filing: 08.02.2023
(51) Int. Cl.: H04W 4/06, H04W 48/10, H04W 72/30, H04W 76/40, H04W 48/12

(54) **COMMUNICATION METHOD AND USER EQUIPMENT**
KOMMUNIKATIONSVERFAHREN UND BENUTZERGERÄT
PROCÉDÉ DE COMMUNICATION ET ÉQUIPEMENT UTILISATEUR

(30) Priority: 10.02.2022 US 202263308561 P
(43) Date of publication of application: 13.11.2024
(73) Proprietor: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/004230
(87) International publication number: WO 2023/153452

(56) References cited:
- INTEL CORPORATION: "Broadcast service continuity", vol. RAN WG2, no. Electronic meeting; 20211101 - 20211112, 22 October 2021 (2021-10-22), XP052067187, Retrieved from the Internet <URL:https://ftp.3gpp.org/tsg_ran/WG2_RL2/TSGR2_116-e/Docs/R2-2110744.zip R2-2110744.docx> [retrieved on 20211022]
- HUAWEI ET AL: "Untreated proposals from offline discussion: [AT116-e][051][MBS] CP continuation", vol. RAN WG2, no. E-meeting; 20220117 - 20220125, 5 January 2022 (2022-01-05), XP052089797, Retrieved from the Internet <URL:https://ftp.3gpp.org/tsg_ran/WG2_RL2/TSGR2_116bis-e/Docs/R2-2200021.zip R2-2200021_Untreated proposals from [AT116-e][051][MBS] CP continuation.docx> [retrieved on 20220105]
- KYOCERA: "Remaining issues of broadcast service continuity and control plane aspects", 3GPP DRAFT; R2-2110206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210809 - 20210827, 22 October 2021 (2021-10-22), Mobile Competence Centre ; 650, route des Lucioles ; F-06921 Sophia-Antipolis Cedex ; France, XP052066652
- XIAOMI COMMUNICATIONS: "Summary of [Post114-e][073][MBS] Service continuity for Delivery Mode 2 (Xiaomi)", 3GPP DRAFT; R2-2108799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210816 - 20210827, 6 August 2021 (2021-08-06), Mobile Competence Centre ; 650, route des Lucioles ; F-06921 Sophia-Antipolis Cedex ; France , XP052035130
- HUAWEI, HISILICON: "MBS service continuity for broadcast", 3GPP DRAFT; R2-2200817, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-meeting; 20220117 - 20220125, 11 January 2022 (2022-01-11), Mobile Competence Centre ; 650, route des Lucioles ; F-06921 Sophia-Antipolis Cedex ; France, XP052093948
- ZTE, SANECHIPS: "General aspects of NR MBS", 3GPP DRAFT; R2-2101215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210125 - 20210205, 15 January 2021 (2021-01-15), Mobile Competence Centre ; 650, route des Lucioles ; F-06921 Sophia-Antipolis Cedex ; France , XP051974182
- SAMSUNG: "(TP for TS 38.473 BL): Introduction of session management for broadcast", 3GPP DRAFT; R3-220790, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. 20220117 - 20220126, 7 January 2022 (2022-01-07), Mobile Competence Centre ; 650, route des Lucioles ; F-06921 Sophia-Antipolis Cedex ; France, XP052099251
- KYOCERA: "Details of control plane aspects for delivery mode 2 in NR MBS", 3GPP DRAFT; R2-2107999, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210809 - 20210827, 6 August 2021 (2021-08-06), Mobile Competence Centre ; 650, route des Lucioles ; F-06921 Sophia-Antipolis Cedex ; France , XP052034578
- KYOCERA: "Frequency of interest in MBS Interest Indication", 3GPP DRAFT; R2-2202909, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20220221 - 20220303, 14 February 2022 (2022-02-14), Mobile Competence Centre ; 650, route des Lucioles ; F-06921 Sophia-Antipolis Cedex ; France, XP052110758

## Description

### TECHNICAL FIELD

The present disclosure relates to a communication method, a user equipment used in a mobile communication system, a chipset, a computer program, and a mobile communication system.

### BACKGROUND

In 3rd Generation Partnership Project (3GPP) standards, technical specifications of New Radio (NR) being radio access technology of the fifth generation (5G) have been defined. NR has features such as high speed, large capacity, high reliability, and low latency, in comparison to Long Term Evolution (LTE) being radio access technology of the fourth generation (4G). In 3GPP, there have been discussions for establishing technical specifications of multicast broadcast services (MBS) of 5G/NR (for example, see Non-Patent Document 1).

### CITATION LIST

### NON-PATENT LITERATURE

Non-Patent Document 1: 3GPP Contribution: RP-201038, "WID revision: NR Multicast and Broadcast Services"
3GPP TSG-RAN WG2 Meeting#116-e, R2-2110744 is concerned with broadcast service continuity.
3GPP TSG-RAN WG2 Meeting#116bis-e, R2-2200021 is concerned with control plane issues.
3GPP Draft-RAN WG2 Meeting#116-e, R2-2110206 is concerned with broadcast service continuity and control plane issues.
3GPP Draft-RAN WG2 Meeting#114-e, R2-2108799 is concerned with service continuity for delivery mode 2.
3GPP Draft-RAN WG2 Meeting#116bis-e, R2-2200817 is concerned with service continuity for broadcast.
3GPP Draft-RAN WG2 Meeting#113-e, R2-2101215 is concerned with general aspects of NR
   MBS.
3GPP Draft-RAN WG3 Meeting#114bis-e, R3-220790 is concerned with session management for broadcast.

### SUMMARY

5G/NR multicast broadcast services are desired to provide enhanced services compared to 4G/LTE multicast broadcast services.

In view of this, the present invention provides a communication method according to claim 1, a user equipment according to claim 5, a chipset according to claim 6, a computer program according to claim 7, and a mobile communication system according to claim 8. Preferred embodiments are described in the dependent claims.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating an example of internal processing related to MBS reception of the UE according to an embodiment.
FIG. 9 is a diagram illustrating another example of internal processing related to MBS reception of the UE according to an embodiment.
FIG. 10 is a diagram for illustrating an overview of an MII according to an embodiment.
FIG. 11 is a diagram illustrating a configuration example of SIBx1 according to an embodiment.
FIG. 12 is a diagram illustrating the operation of option 1 according to an embodiment, that is specifically a specification variation in 3GPP Technical Specification TS 38.331.
FIG. 13 is a diagram illustrating the operation of option 2 according to an embodiment, that is specifically a specification variation in 3GPP Technical Specification TS 38.331.
FIG. 14 is a diagram illustrating the operation of option 3 according to an embodiment, that is specifically a specification variation in 3GPP Technical Specification TS 38.331.
FIG. 15 is a diagram illustrating the operation of option A according to an embodiment, that is specifically a specification variation in 3GPP Technical Specification TS 38.331.
FIG. 16 is a diagram illustrating operation example 1 of option B according to an embodiment, that is specifically a specification variation in 3GPP Technical Specification TS 38.331.
FIG. 17 is a diagram illustrating operation example 2 of option B according to an embodiment, that is specifically a specification variation in 3GPP Technical Specification TS 38.331.
FIG. 18 is a diagram illustrating operation example 1 of option C according to an embodiment, that is specifically a specification variation in 3GPP Technical Specification TS 38.331.
FIG. 19 is a diagram illustrating operation example 2 of option C according to an embodiment, that is specifically a specification variation in 3GPP Technical Specification TS 38.331.
FIG. 20 is a diagram illustrating configuration example 1 of the MII according to an embodiment, that is specifically a specification variation in 3GPP Technical Specification TS 38.331.
FIG. 21 is a diagram illustrating a variation of configuration example 1 of the MII according to an embodiment, that is specifically a specification variation in 3GPP Technical Specification TS 38.331.

### DESCRIPTION OF EMBODIMENTS

A mobile communication system according to an embodiment is described with reference to the drawings. In the description of the drawings, the same or similar parts are denoted by the same or similar reference signs.

### (1) Configuration of Mobile Communication System

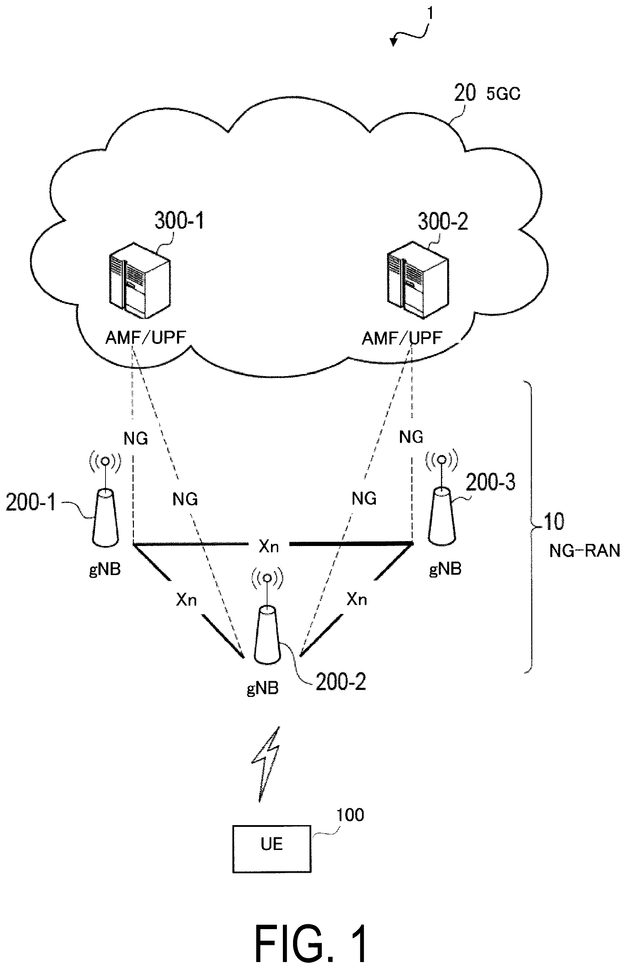

FIG. 1 is a diagram illustrating a configuration of a mobile communication system according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

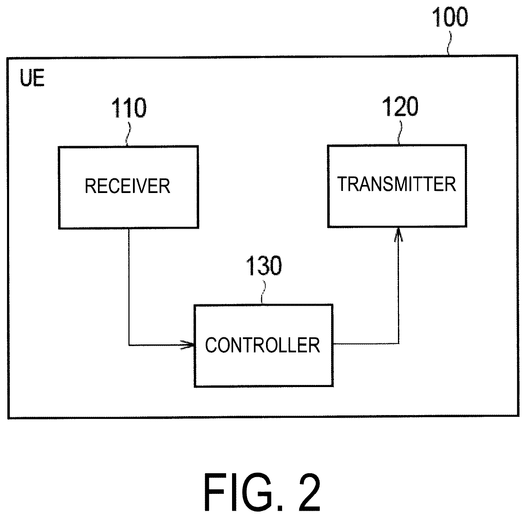

FIG. 2 is a diagram illustrating a configuration of the UE 100 (user equipment) to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

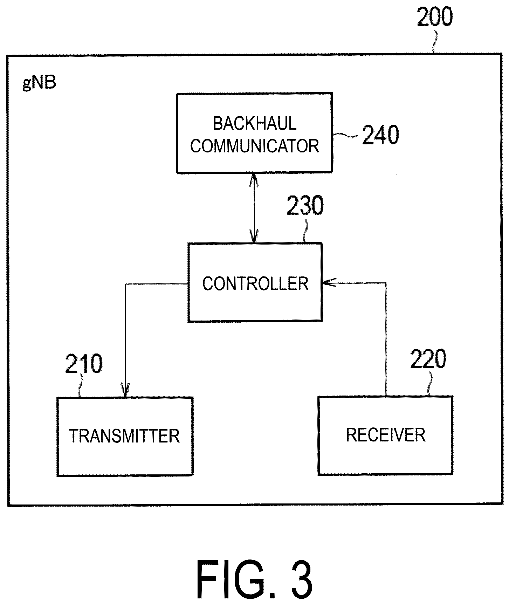

FIG. 3 is a diagram illustrating a configuration of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

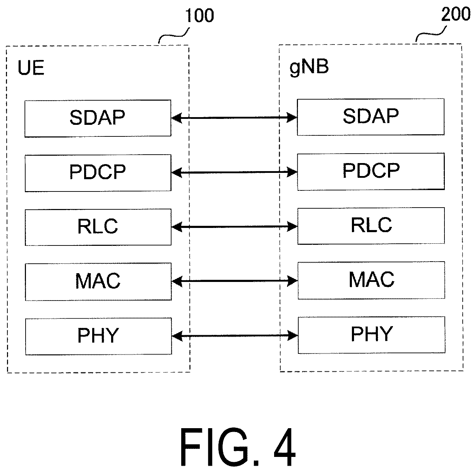

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

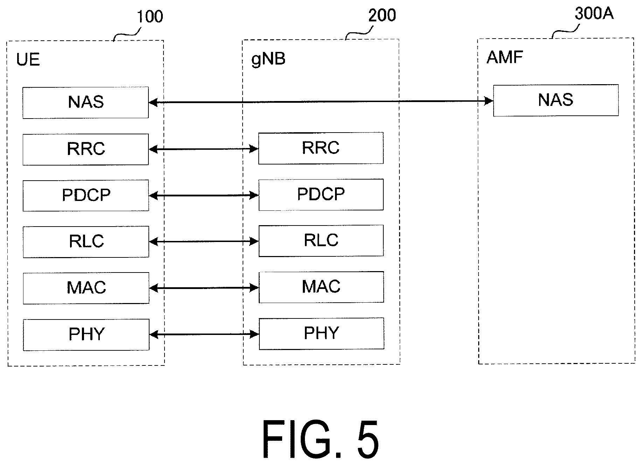

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signalling is transmitted between the NAS layer of the UE 100 and the NAS layer of an AMF 300A. Note that the UE 100 includes an application layer other than the protocol of the radio interface. A layer lower than the NAS layer is referred to as an AS layer.

### (2) Overview of MBS

An overview of the MBS according to an embodiment will be described. The MBS is a service in which the NG-RAN 10 can provide broadcast or multicast, i.e., Point To Multipoint (PTM) data transmission to the UE 100. Assumed use cases (service types) of the MBS include public safety communication, mission critical communication, Vehicle to Everything (V2X) communication, IPv4 or IPv6 multicast delivery, Internet protocol television (IPTV), group communication, and software delivery.

A broadcast service provides a service to every UE 100 within a particular service area for an application not requiring highly reliable QoS. An MBS session used for the broadcast service is referred to as a broadcast session.

A multicast service provides a service not to every UE 100, but to a group of UEs 100 joining the multicast service (multicast session). An MBS session used for the multicast service is referred to as a multicast session. The multicast service can provide the same content to the group of UEs 100 through a method with higher radio efficiency than the broadcast service.

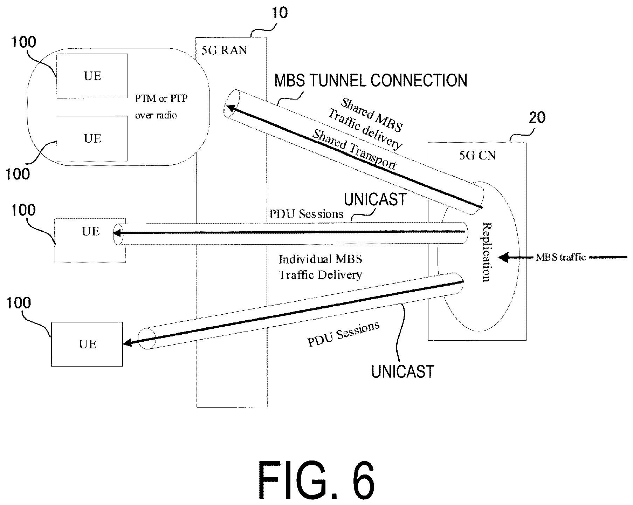

FIG. 6 is a diagram illustrating an overview of MBS traffic delivery according to the embodiment.

MBS traffic (MBS data) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via PDU sessions of the individual UEs 100. Thus, one PDU session for each UE 100 needs to be associated with a multicast session.

In the 5GC shared MBS traffic delivery method, the 5GC 20 receives a single copy of MBS data packets and delivers the single copy of the MBS packets to a RAN node (i.e., the gNB 200). The gNB 200 receives the MBS data packets via MBS tunnel connection, and delivers those to one or more UEs 100.

From the perspective of the RAN (5G RAN) 10, two delivery methods are possible for radio transmission of the MBS data in the 5GC shared MBS traffic delivery method: a Point-to-Point (PTP) delivery method and a Point-to-Multipoint (PTM) delivery method. PTP means unicast, and PTM means multicast and broadcast.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 can dynamically determine whether to use the PTM or PTP delivery method as a method for delivering the MBS data to one UE 100.

The PTP and PTM delivery methods are mainly related to the user plane. Modes for controlling the MBS data delivery include two delivery modes: a first delivery mode and a second delivery mode.

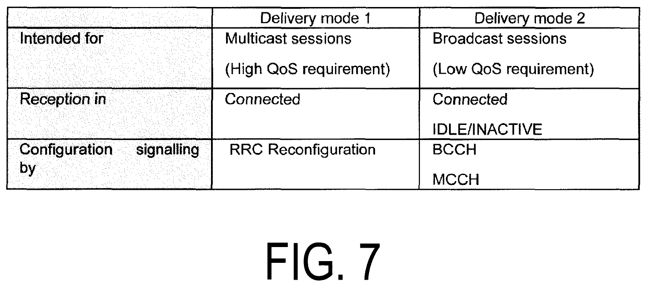

FIG. 7 is a diagram illustrating delivery modes according to the embodiment.

The first delivery mode (Delivery mode 1 (DM1)) is a delivery mode that can be used by the UE 100 in the RRC connected state, and is a delivery mode for high QoS requirements. The first delivery mode is used for multicast sessions among MBS sessions. Note that the first delivery mode may be used for broadcast sessions. The first delivery mode may be available to the UE 100 in the RRC idle state or the RRC inactive state.

MBS reception configuration in the first delivery mode is performed through UE-dedicated signalling. For example, the MBS reception configuration in the first delivery mode is performed through an RRC Reconfiguration message (or an RRC Release message), which is an RRC message unicast from the gNB 200 to the UE 100.

The MBS reception configuration includes MBS traffic channel configuration information (hereinafter referred to as "MTCH configuration information") about configuration of an MBS traffic channel transmitting MBS data. The MTCH configuration information includes MBS session information (including an MBS session identifier described below) relating to an MBS session and scheduling information of the MBS traffic channel corresponding to the MBS session. The scheduling information of an MBS traffic channel may include discontinuous reception (DRX) configuration of the MBS traffic channel. The discontinuous reception configuration may include at least one parameter of a timer value (On Duration Timer) for defining an on-period (On Duration: reception period), a timer value (Inactivity Timer) for extending the on-period, a scheduling interval or a DRX cycle (Scheduling Period, DRX Cycle), an offset value (Start Offset, DRX Cycle Offset) of a start subframe for scheduling or a DRX cycle, a start delay slot value (Slot Offset) of an on-period timer, a timer value (Retransmission Timer) for defining a maximum time until retransmission, and a timer value (HARQ RTT Timer) for defining a minimum interval until DL assignment of HARQ retransmission.

Note that the MBS traffic channel is a type of logical channel and may be referred to as an MTCH. The MBS traffic channel is mapped to a downlink shared channel (Down Link-Shared CHannel (DL-SCH)) being a type of transport channel.

The second delivery mode (Delivery mode 2 (DM2)) is a delivery mode that can be used not only by the UE 100 in the RRC connected state, but also by the UE 100 in the RRC idle state or the RRC inactive state, and is a delivery mode for low QoS requirements. The second delivery mode is used for broadcast sessions among MBS sessions. However, the second delivery mode may also be applicable to multicast sessions.

An MBS reception configuration in the second delivery mode is performed through broadcast signalling. For example, the MBS reception configuration in the second delivery mode is performed using a logical channel transmitted from the gNB 200 to the UE 100 through broadcast, for example, a broadcast control channel (BCCH) and/or a multicast control channel (MCCH). The UE 100 can receive the BCCH and the MCCH, using a dedicated RNTI defined in technical specifications in advance, for example. The RNTI for BCCH reception may be an SI-RNTI, and the RNTI for MCCH reception may be an MCCH-RNTI.

In the second delivery mode, the UE 100 may receive the MBS data in the following three procedures. First, the UE 100 receives MCCH configuration information on an SIB (MBS SIB) transmitted from the gNB 200 on the BCCH. Second, the UE 100 receives the MCCH from the gNB 200, based on the MCCH configuration information. On the MCCH, MTCH configuration information is transmitted. Third, the UE 100 receives the MTCH (MBS data), based on the MTCH configuration information. The MTCH configuration information and/or the MCCH configuration information may be hereinafter referred to as the MBS reception configuration.

In the first delivery mode and the second delivery mode, the UE 100 may receive the MTCH, using a group RNTI (G-RNTI) assigned from the gNB 200. The G-RNTI corresponds to an RNTI for MTCH reception. The G-RNTI may be included in the MBS reception configuration (MTCH configuration information).

The network can provide different MBS services for different MBS sessions. The MBS session is identified by at least one selected from the group consisting of a Temporary Mobile Group Identity (TMGI), a source-specific IP multicast address (which consists of a source unicast IP address, such as an application function and an application server, and an IP multicast address indicating a destination address), a session identifier, and a G-RNTI. At least one selected from the group consisting of the TMGI, the source specific IP multicast address, and the session identifier is referred to as an MBS session identifier. The TMGI, the source-specific IP multicast address, the session identifier, and the G-RNTI are collectively referred to as MBS session information.

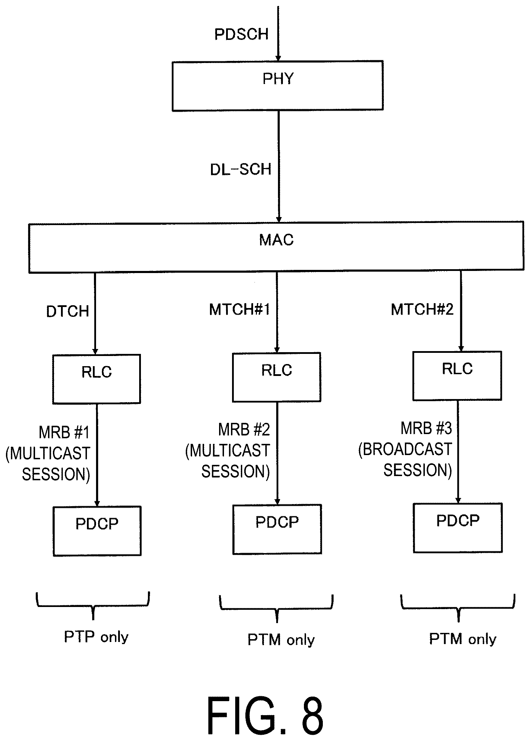

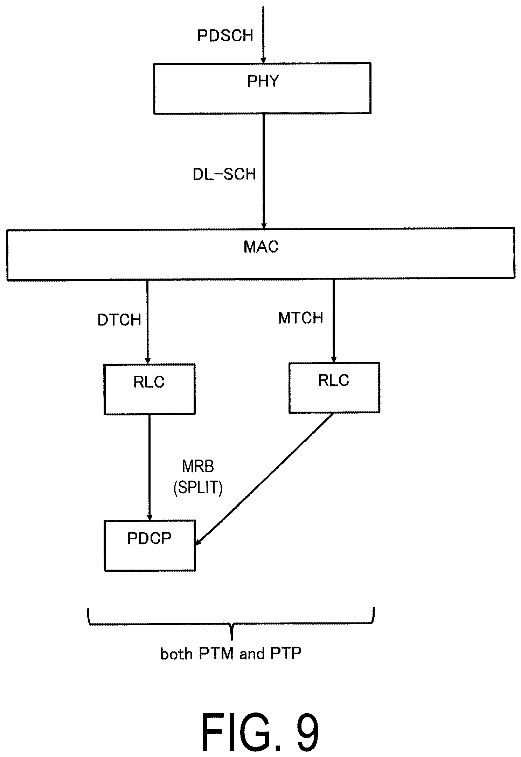

FIG. 8 is a diagram illustrating an example of internal processing related to the MBS reception of the UE 100 according to an embodiment. FIG. 9 is a diagram illustrating another example of the internal processing related to the MBS reception of the UE 100 according to an embodiment.

One MBS radio bearer (MRB) is one radio bearer transmitting a multicast session or a broadcast session. That is, a multicast session may be associated with an MRB or a broadcast session may be associated with an MRB.

The MRB and the corresponding logical channel (e.g., MTCH) are configured for the UE 100 from the gNB 200 through RRC signalling. An MRB configuration procedure may be separated from a data radio bearer (DRB) configuration procedure. In the RRC signalling, one MRB can be configured with "PTM only", "PTP only", or "both PTM and PTP". The type of MRB may be changed by the RRC signalling.

FIG. 8 illustrates an example in which a multicast session and a dedicated traffic channel (DTCH) are associated with an MRB #1, a multicast session and an MTCH #1 are associated with an MRB #2, and a broadcast session and an MTCH #2 are associated with an MRB #3. That is, the MRB #1 is configured with PTP only MRB, the MRB #2 is configured with PTM only MRB, and the MRB #3 is configured with PTM only MRB. Note that the DTCH is scheduled using a cell RNTI (C-RNTI). The MTCH is scheduled using the G-RNTI.

The PHY layer of the UE 100 processes user data (received data) received on the PDSCH, which is one of physical channels, and routes the processed user data to the downlink shared channel (DL-SCH), which is one of transport channels. The MAC layer (MAC entity) of the UE 100 processes the data received on the DL-SCH and routes the received data to a corresponding logical channel (corresponding RLC entity) based on a logical channel identifier (LCID) included in the header (MAC header) included in the received data.

FIG. 9 illustrates an example in which the DTCH and the MTCH are associated with the MRB associated with the multicast session. Specifically, one MRB is split into two legs, one leg is associated with the DTCH, and the other leg is associated with the MTCH. The two legs are combined at the PDCP layer (PDCP entity). That is, the MRB is an MRB configured with both PTM and PTP. Such an MRB may be referred to as a split MRB.

### (3) Overview of MBS Interest Indication

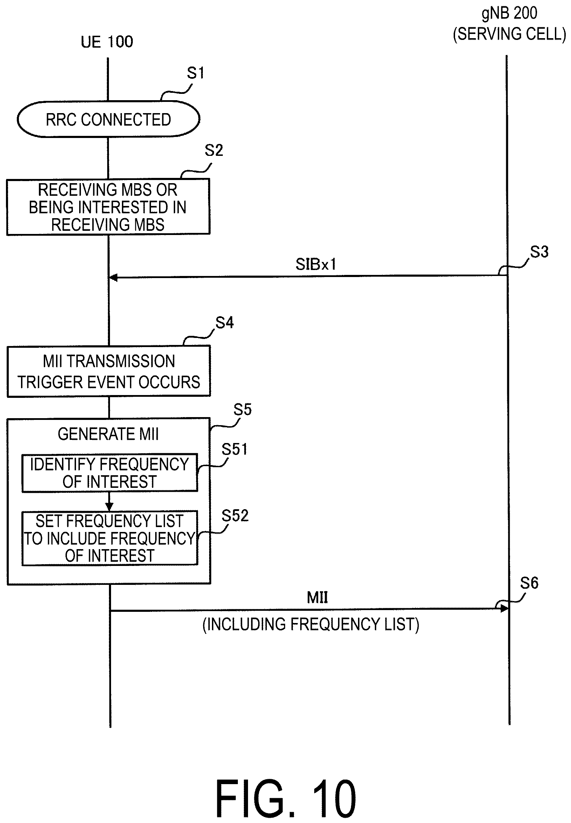

An overview of an MBS Interest Indication (MII) according to an embodiment will be described. FIG. 10 is a diagram for illustrating an overview of the MII according to an embodiment.

In the RRC connected state (Step S1), the UE 100 is receiving or is interested in receiving the MBS session (Step S2).

In Step S3, the UE 100 receives an SIB (hereinafter referred to as "SIBx1") for service continuity of the MBS from the gNB 200 (serving cell). The SIBx1 is an SIB indicating a correspondence relationship (mapping) between the MBS services and frequencies. A configuration example of the SIBx1 will be described later. Note that the SIBx1 is an SIB different from the MBS SIB described above. The UE 100 may receive the SIBx1 from the gNB 200 prior to Step S1 or prior to Step S2.

The UE 100 can transmit the MBS Interest Indication (MII) to the serving cell that provides the SIBx1, that is, the serving cell that has a function for service continuity of the MBS. In other words, the UE 100 transmits the MII to the serving cell only when the serving cell provides the SIBx1. The MII is a type of RRC message, and is a message used by the UE 100 to notify the network that the UE 100 is receiving or is interested in receiving MBS broadcast services via a broadcast MRB. Based on the MII, the network (gNB 200) can control MBS service delivery and hand the UE 100 over to an appropriate cell.

In Step S4, an MII transmission trigger (trigger event) occurs in the UE 100. Examples of types of the MII transmission trigger (trigger event) include a time when connection establishment has succeeded, a time of entry into or exit from a broadcast service area, a time when an MBS broadcast session starts or stops, a time when an interest in the MBS changes, a time when a priority between MBS broadcast reception and unicast reception changes, and a time when a cell changes to a cell (primary cell) that broadcasts the SIB for service continuity of the MBS.

In Step S5, the UE 100 generates the MII. The MII includes at least one selected from the group consisting of a frequency list (MBS frequency list) being a list of MBS frequencies that the UE 100 is receiving or is interested in receiving, priority information indicating a priority regarding which is prioritized between reception of all of the listed MBS frequencies and reception of a unicast bearer, and a TMGI list being a list of MBS sessions that the UE 100 is receiving or is interested in receiving. The frequency list in the MII will be mainly described below.

Step S5 includes Step S51 for identifying MBS frequencies (hereinafter referred to as "frequencies of interest") that the UE 100 is receiving or is interested in receiving and Step S52 for setting the frequency list to include the identified frequencies of interest. Details of Step S51 and Step S52 will be described later.

In Step S6, the UE 100 transmits the MII to the gNB 200 (serving cell).

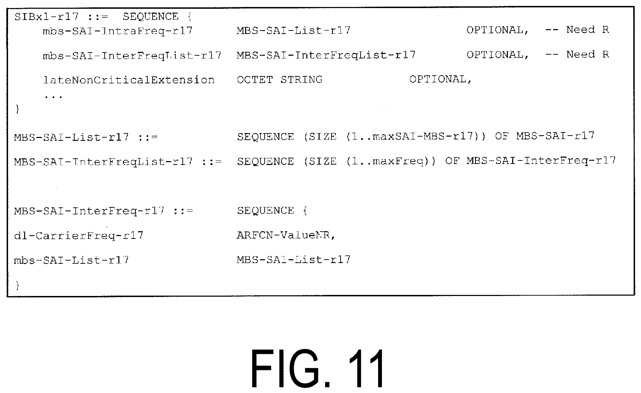

FIG. 11 is a diagram illustrating a configuration example of the SIBx1 according to an embodiment. The SIBx1 is used by the UE 100 to derive the frequencies (MBS frequencies of interest) that provide a desired MBS service (desired MBS session) that the UE 100 is receiving or is interested in receiving.

The term "MBS service" is hereinafter used as a term of a concept including an "MBS session". An identifier of the MBS service is referred to as an "MBS service identifier". The MBS service identifier may be the MBS session identifier (for example, the TMGI) described above. The MBS service identifier may be an MBS service area identifier (MBS SAI). The MBS service identifier may be expressed as the MBS SAI.

As illustrated in FIG. 11, the SIBx1 may include mbs-SAI-IntraFreq-r17 and/or mbs-SAI-InterFreqList-r17. mbs-SAI-IntraFreq-r17 includes MBS-SAI-List-r17 being a list of MBS service identifiers of MBS services provided in an intra-frequency (that is, a frequency the same as that of the serving cell). mbs-SAI-InterFreqList-r17 includes MBS-SAI-InterFreq-r17 indicating a correspondence relationship (mapping) between the frequencies and the MBS services provided in the frequencies for each of the frequencies regarding an inter-frequency (that is, a frequency different from that of the serving cell). MBS-SAI-InterFreq-r17 includes frequency identifiers (ARFCN-ValueNR) indicating downlink carrier frequencies (dl-CarrierFreq-r17) and a list (mbs-SAI-List-r17) of MBS service identifiers.

### (4) Operation According to Embodiment

Operation according to an embodiment will be described.

In frequency prioritization in cell reselection, the UE 100 in the RRC idle state or the RRC inactive state identifies a frequency that provides the desired MBS service based on the SIBx1, and sets the identified frequency as a highest priority. Note that, when frequency information (mbs-SAI-IntraFreq-r17 and mbs-SAI-InterFreqList-r17) is not provided in the SIBx1, it is assumed that the frequency of interest that provides the desired MBS service is identified based on a User Service Description (USD) being upper layer information, and the identified frequency of interest is set as the highest priority.

Here, the USD is provided from an Application Function (AF)/a Multicast Broadcast Service Function (MBSF) in the network to the UE 100, for example. Such a USD is an example of upper layer information provided from the network in an upper layer (specifically, an application layer) of the RRC layer. The USD may be referred to as service announcement information. The USD includes information indicating a correspondence relationship between the MBS services and the frequencies. The USD may include at least one set of an MBS service identifier and information of a frequency. For example, the USD may include at least one selected from the group consisting of an MBS session identifier for identifying an MBS session, information of start and end times of the MBS session, an SAI indicating an MBS service area in which the MBS session is provided, and information of a frequency in which the MBS session is provided.

Cell reselection control based on the USD as described above assumes the following scenario. Specifically, even when the gNB 200 provides the SIBx1, the gNB 200 may not provide neighboring frequency information (mbs-SAI-InterFreqList-r17) in the SIBx1. For example, when an MBS service is uniformly provided in a certain frequency/area, even when all of the cells in the area do not broadcast the neighboring frequency information, the UE 100 can derive an appropriate frequency of interest from the frequency information provided in the USD. Thus, by controlling cell reselection with the frequency of interest being set as the highest priority, service continuity of broadcast services can be secured.

On the other hand, the UE 100 in the RRC connected state identifies the frequency of interest based on the SIBx1 to generate the frequency list in the MII. However, when the neighboring frequency information is not provided in the SIBx1, the UE 100 cannot appropriately identify the frequency of interest. It is assumed that the UE 100 in the RRC idle state or the RRC inactive state identifies the frequency of interest based on the USD; however, there is a problem in that such operation is not assumed for the UE 100 in the RRC connected state. In the following embodiments, a method and operation for solving such a problem will be described.

As described above, the UE 100 receives a predetermined SIB (SIBx1) that may include frequency information indicating a correspondence relationship between an identifier of an MBS service (MBS service identifier) and a frequency for providing the MBS service from the serving cell (Step S3 of FIG. 10). The UE 100 generates an MII including a frequency list indicating a frequency of interest being an MBS frequency that the UE 100 is receiving or is interested in receiving (Step S5 of FIG. 10), and transmits the MII to the serving cell (Step S6 of FIG. 10).

In an embodiment, in generating the MII, the UE 100 includes the frequency of interest in the frequency list, even when the frequency of interest of the UE 100 is not indicated in the predetermined SIB (SIBx1). Thus, even when the frequency information (in particular, mbs-SAI-InterFreqList-r17) is not provided in the SIBx1, the network can recognize the frequency of interest of the UE 100, based on the frequency list in the MII.

For example, even when the frequency of interest is not indicated in the predetermined SIB, the UE 100 includes the frequency of interest in the frequency list, based on the upper layer information (USD) stored in the UE 100, which is information indicating a correspondence relationship between the identifier of the MBS service (MBS service identifier) and the frequency for providing the MBS service. In other words, the UE 100 includes the frequency of interest in the frequency list, based on the USD, instead of the SIBx1.

The UE 100 may include the frequency of interest in the frequency list, based on the SIB for cell reselection received from the serving cell, instead of the SIBx1. The SIB for cell reselection is an SIB provided from the serving cell, and is an SIB indicating an inter-frequency different from the frequency of the serving cell. The SIB for cell reselection may be SIB type 4 (SIB4) and/or SIB type 5 (SIB5) defined in 3GPP technical specifications.

Such an SIB for cell reselection includes one or more sets of an identifier of the inter-frequency and a cell reselection parameter (for example, a frequency priority). The inter-frequency indicated in the SIB for cell reselection corresponds to a frequency of a neighboring cell, and is thus regarded as a frequency available for the UE 100. The UE 100 includes the frequency of interest, which is such an available frequency only, in the frequency list. Note that, because the desired MBS service is not necessarily provided in the inter-frequency indicated in the SIB for cell reselection, the UE 100 includes the frequency of interest in the frequency list, using the SIB for cell reselection as well as the USD.

### (4.1) Operation of Identifying Frequency of Interest

Options 1 to 3 of the operation of identifying the frequency of interest according to an embodiment will be described. The UE 100 identifies the frequency of interest, according to one of the following options 1 to 3.

### (4.1.1) Option 1

In option 1, in generating the MII, the UE 100 identifies the frequency of interest, based on the upper layer information (USD), regardless of the frequency information in the predetermined SIB (SIBx1). In other words, the UE 100 identifies the frequency of interest, based on USD information, without checking the frequency information provided in the SIBx1.

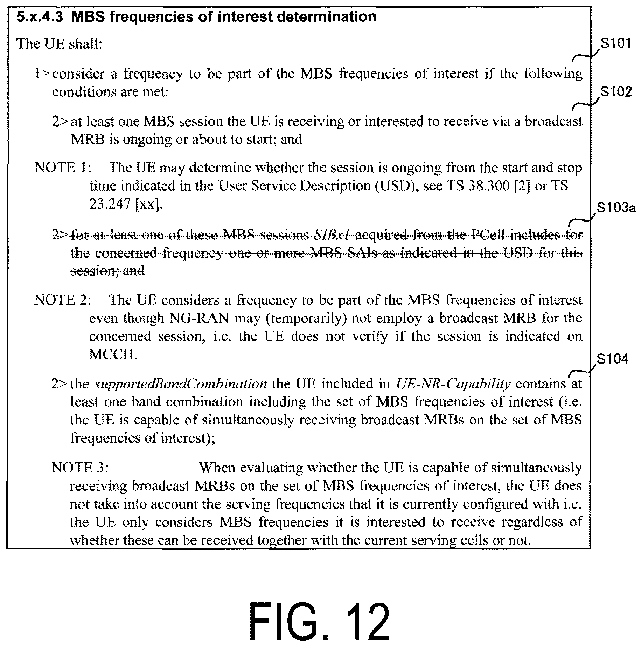

FIG. 12 is a diagram illustrating the operation of option 1 according to an embodiment, that is specifically a specification variation in 3GPP Technical Specification TS 38.331.

The UE 100 considers frequencies in which conditions of Steps S102 to S104 are met to be the frequencies of interest (MBS frequencies of interest) (Step S101).

Step S102 is a determination of a condition that at least one MBS session (desired MBS service) that the UE 100 is receiving or is interested in receiving via the broadcast MRB is ongoing or is to be started.

Step S103a is determination of a condition that the service identifier indicated regarding the desired MBS service in the USD is included in the SIBx1 acquired from a PCell (serving cell) regarding a certain frequency. In option 1, the condition determination is omitted. In other words, the UE 100 identifies the frequency of interest, based on the USD, regardless of the frequency information included in the SIBx1.

Step S104 is a determination of a condition that supportedBandCombination of the UE 100 included in UE-NR-Capability includes at least one combination of frequency bands including a set of frequencies of interest (MBS frequencies of interest) (that is, the UE 100 can simultaneously receive the broadcast MRB in the set of frequencies of interest).

In this manner, by omitting (disabling) the condition determination of Step S103a, even when the SIBx1 does not include the neighboring frequency information (and MBS service identifiers in neighboring frequencies), the UE 100 can identify the frequencies of interest (MBS frequencies of interest), based on the USD. For example, the UE 100 reads a service identifier and information of a frequency for providing the service from the USD, and identifies a frequency that provides the service of interest (desired MBS service) as the frequency of interest.

Note that the UE 100 may determine whether to omit (disable) the condition determination in Step S103a, based on an indication (or a permission) from the gNB 200. For example, the gNB 200 may notify the UE 100 of information for permitting or indicating omission of the condition determination (or identification of the frequency of interest using the information of the USD) of Step S103a, using the SIBx1.

### (4.1.2) Option 2

In option 2, in generating the MII, the UE 100 identifies the frequency of interest, based on the upper layer information (USD), in response to the UE 100 recognizing that the predetermined SIB (SIBx1) does not include the frequency information. In other words, only when the frequency information is not provided in the SIBx1, the UE 100 identifies the frequency of interest, based on the frequency information provided in the USD.

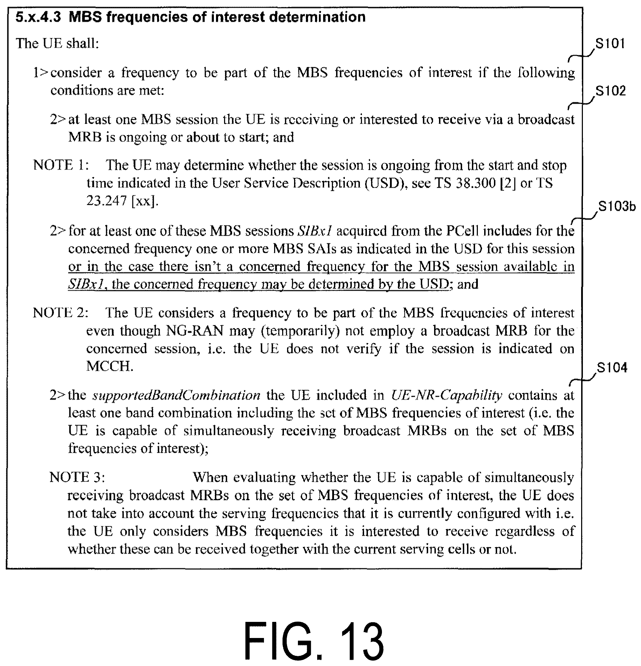

FIG. 13 is a diagram illustrating the operation of option 2 according to an embodiment, that is specifically a specification variation in 3GPP Technical Specification TS 38.331.

Operation other than Step S103b is the same as and/or similar to option 1 described above.

In Step S103b, firstly, the UE 100 determines a condition that the service identifier indicated regarding the desired MBS service in the USD is included in the SIBx1 acquired from the PCell (serving cell) regarding a certain frequency. Secondly, when the frequency information is unavailable in the SIBx1 regarding the MBS service (MBS session), the UE 100 determines a frequency regarding the desired MBS service, based on the USD. Specifically, when the UE 100 recognizes that the neighboring frequency information (and/or MBS service identifiers in neighboring frequencies) is not provided, the UE 100 reads a service identifier (an SAI or the like) and frequency information for providing the service from the USD, and identifies the frequency that provides the service of interest as the frequency of interest.

In this manner, by adding a determination based on the USD as the condition determination of Step S103b, even when the SIBx1 does not include the neighboring frequency information (and MBS service identifiers in neighboring frequencies), the UE 100 can identify the frequencies of interest (MBS frequencies of interest), based on the USD.

### (4.1.3) Option 3

In option 3, in generating the MII, the UE 100 identifies the frequency of interest, based on the SIB for cell reselection and the upper layer information, in response to the UE 100 recognizing that the predetermined SIB (SIBx1) does not include the frequency information. For example, when the frequency information is not provided in the SIBx1, the UE 100 identifies a frequency that matches a frequency associated with the desired MBS service in the USD out of frequencies provided in the SIB4 and/or the SIB5 as the frequency of interest.

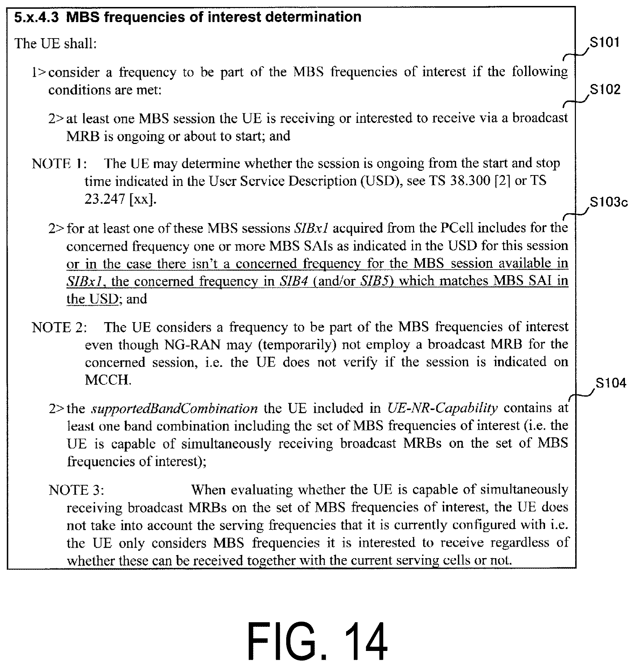

FIG. 14 is a diagram illustrating the operation of option 3 according to an embodiment, that is specifically a specification variation in 3GPP Technical Specification TS 38.331.

Operation other than Step S103c is the same as and/or similar to option 1 described above.

In Step S103c, firstly, the UE 100 determines a condition that the service identifier indicated regarding the desired MBS service in the USD is included in the SIBx1 acquired from the PCell (serving cell) regarding a certain frequency. Secondly, when the frequency information is unavailable in the SIBx1 regarding the MBS service (MBS session), the UE 100 performs determination based on the SIB4 and/or the SIB5. Specifically, when the UE 100 recognizes that the neighboring frequency information (and/or MBS service identifiers in neighboring frequencies) is not provided in the SIBx1, the UE 100 reads a service identifier (an SAI or the like) and frequency information for providing the service from the USD. Then, when the frequency for providing the service of interest is included in the SIB4 (and/or the SIB5), the UE 100 identifies the frequency as the frequency of interest.

In this manner, by adding a determination based on the USD and the SIB4 and/or the SIB5 as the condition determination of Step S103c, even when the SIBx1 does not include the neighboring frequency information (and MBS service identifiers in neighboring frequencies), the UE 100 can identify the frequencies of interest (MBS frequencies of interest), based on the USD and the SIB4 and/or the SIB5.

Note that the UE 100 may determine whether to perform determination based on the SIB4 and/or the SIB5 in Step S103c, based on an indication (or a permission) from the gNB 200. For example, the gNB 200 may notify the UE 100 of information for permitting or indicating determination based on the SIB4 and/or the SIB5 in Step S103c, using the SIBx1. Under such an assumption, in Step S103c, in response to presence of an indication to use the SIB4 and/or the SIB5 in the SIBx1 instead of the frequency information being unavailable in the SIBx1, the UE 100 may read a service identifier (an SAI or the like) and frequency information for providing the service from the USD, and when the frequency that provides the service of interest is included in the SIB4 (and/or the SIB5), the UE 100 may identify the frequency as the frequency of interest.

(4.2) Operation of Setting Frequency of Interest to Frequency List Options A to C of the operation of setting the frequency of interest to the frequency list according to an embodiment will be described. The UE 100 sets the frequency list to include the frequency of interest, according to one of the following options A to C.

Based on the operation of identifying the frequency of interest of (4.1) described above, even when the neighboring frequency information is not provided in the SIBx1, the frequency of interest can be identified. However, it is assumed that the frequency list in the MII is set to include a frequency identifier (Absolute radio-frequency channel number (ARFCN)) provided in the SIBx1. Thus, even when the frequency of interest is identified, the frequency of interest cannot be included in the MII. In options A to C, such a problem can be solved.

### (4.2.1) Option A

In option A, in generating the MII, the UE 100 sets the frequency list to include all of the MBS frequencies of interest identified based on the upper layer information (USD), regardless of the frequency information in the predetermined SIB (SIBx1). In other words, the UE 100 sets the MII to include all of the frequencies of interest identified based on the operation of identifying the frequency of interest of (4.1) described above.

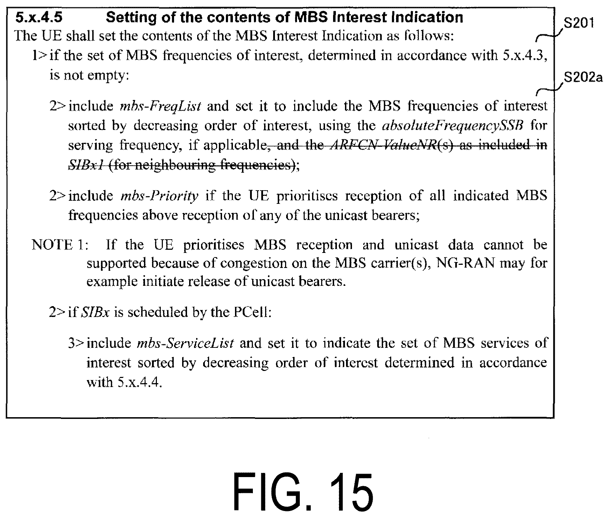

FIG. 15 is a diagram illustrating the operation of option A according to an embodiment, that is specifically a specification variation in 3GPP Technical Specification TS 38.331.

When there are frequencies of interest (MBS frequencies of interest) identified based on the operation of identifying the frequency of interest of (4.1) described above (Step S201), in Step S202a, the UE 100 sets the frequency list (mbs-FreqList) to include the frequencies of interest. Specifically, the UE 100 includes all of the frequencies of interest to the frequency list, regardless of the frequency information in the SIBx1. The UE 100 may convert the frequency information of the USD into ARFCN values and then include them in the MBS frequency list.

When the UE 100 identifies the frequency of interest without using the frequency information in the SIBx1 in the operation of identifying the frequency of interest of (4.1) described above, the UE 100 may perform an operation of including all of the frequencies of interest to the frequency list regardless of the frequency information in the SIBx1. In other words, when the UE 100 identifies the frequency of interest using the frequency information in the SIBx1, the UE 100 may perform an operation of including the frequencies of interest in the frequency list using the frequency information in the SIBx1.

Note that the UE 100 may determine whether to include all of the frequencies of interest to the frequency list regardless of the frequency information in the SIBx1, based on an indication (or a permission) from the gNB 200. For example, the gNB 200 notifies the UE 100 of information for permitting or indicating inclusion of all of the frequencies of interest to the frequency list regardless of the frequency information in the SIBx1, using the SIBx1.

### (4.2.2) Option B

In option B, in generating the MII, the UE 100 sets the frequency list to include all of the MBS frequencies of interest identified based on the upper layer information (USD), in response to the UE 100 recognizing that the predetermined SIB (SIBx1) does not include the frequency information. In other words, only when the frequency information is not provided in the SIBx1, the UE 100 sets the MII to include all of the frequencies of interest.

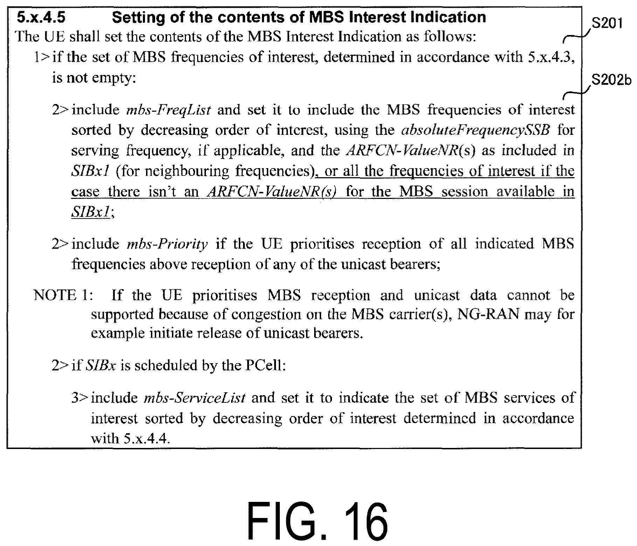

FIG. 16 is a diagram illustrating operation example 1 of option B according to an embodiment, that is specifically a specification variation in 3GPP Technical Specification TS 38.331.

When there are frequencies of interest (MBS frequencies of interest) identified based on the operation of identifying the frequency of interest of (4.1) described above (Step S201), in Step S202b, the UE 100 sets the frequency list (mbs-FreqList) to include the frequencies of interest. Here, the UE 100 includes the frequencies of interest in the frequency list (mbs-FreqList) in descending order of the interest. As identifiers of the frequencies of interest, the frequency list (mbs-FreqList) being set to include the frequencies of interest, absoluteFrequencySSB is used regarding a serving frequency, and ARFCN-ValueNR included in the SIBx1 is used regarding a neighboring frequency. Note that, when there is not a frequency identifier (ARFCN-ValueNR) regarding the desired MBS service in the SIBx1, the UE 100 includes all of the frequencies of interest to the frequency list.

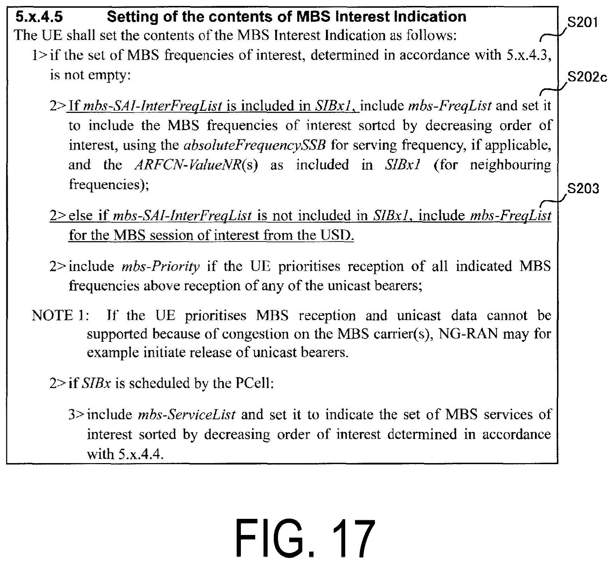

FIG. 17 is a diagram illustrating operation example 2 of option B according to an embodiment, that is specifically a specification variation in 3GPP Technical Specification TS 38.331.

When there are frequencies of interest (MBS frequencies of interest) identified based on the operation of identifying the frequency of interest of (4.1) described above (Step S201) and there is frequency information (mbs-SAI-InterFreqList) in the SIBx1, in Step S202c, the UE 100 sets the frequency list (mbs-FreqList) in the MII to include the frequencies of interest. Here, the UE 100 includes the frequencies of interest in the frequency list (mbs-FreqList) in descending order of the interest. As identifiers of the frequencies of interest, the frequency list (mbs-FreqList) being set to include the frequencies of interest, absoluteFrequencySSB is used regarding a serving frequency, and ARFCN-ValueNR included in the SIBx1 is used regarding a neighboring frequency.

On the other hand, when there is not frequency information (mbs-SAI-InterFreqList) in the SIBx1, in Step S203, the frequency list (mbs-FreqList) in the MII is set to include the frequencies of interest. Here, the UE 100 sets the frequency list to include all of the MBS frequencies of interest identified based on the upper layer information (USD).

In option B, the UE 100 may convert the frequency information of the USD into ARFCN values and then include them in the MBS frequency list.

### (4.2.3) Option C

In option C, in generating the MII, the UE 100 sets the frequency list to include all of the MBS frequencies of interest identified based on the SIB for cell reselection and the upper layer information (USD), in response to the UE 100 recognizing that the predetermined SIB (SIBx1) does not include the frequency information. In other words, when the frequency information is not provided in the SIBx1, the UE 100 sets the MII to include the ARFCNs included in the SIB4 (and/or the SIB5).

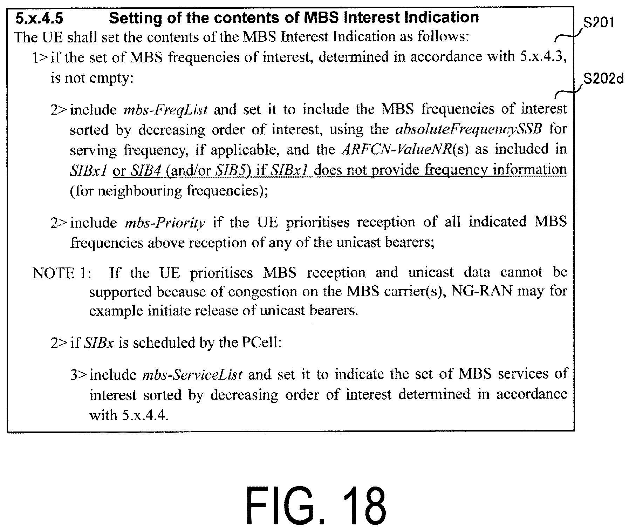

FIG. 18 is a diagram illustrating operation example 1 of option C according to an embodiment, that is specifically a specification variation in 3GPP Technical Specification TS 38.331.

When there are frequencies of interest (MBS frequencies of interest) identified based on the operation of identifying the frequency of interest of (4.1) described above (Step S201), in Step S202d, the UE 100 sets the frequency list (mbs-FreqList) to include the frequencies of interest. Here, the UE 100 includes the frequencies of interest in the frequency list (mbs-FreqList) in descending order of the interest. As identifiers of the frequencies of interest, the frequency list (mbs-FreqList) being set to include the frequencies of interest, absoluteFrequencySSB is used regarding a serving frequency, and ARFCN-ValueNR included in the SIBx1 is used regarding a neighboring frequency. Note that, when there is not a frequency identifier (ARFCN-ValueNR) regarding the desired MBS service in the SIBx1, the UE 100 includes the frequency identifier (ARFCN-ValueNR) included in the SIB4 (and/or the SIB5) to the frequency list regarding a neighboring frequency. In other words, when the UE 100 recognizes that the neighboring frequency information (and/or MBS service identifiers in neighboring frequencies) is not provided in the SIBx1, the UE 100 sets the frequency list to include the frequency (ARFCN value) broadcast using the SIB4 (and/or the SIB5) out of the frequencies of interest.

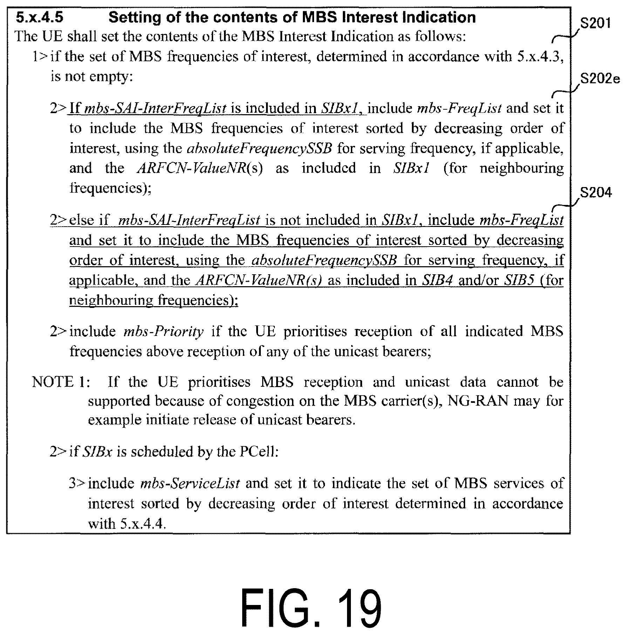

FIG. 19 is a diagram illustrating operation example 2 of option C according to an embodiment, that is specifically a specification variation in 3GPP Technical Specification TS 38.331.

When there are frequencies of interest (MBS frequencies of interest) identified based on the operation of identifying the frequency of interest of (4.1) described above (Step S201) and there is frequency information (mbs-SAI-InterFreqList) in the SIBx1, in Step S202e, the UE 100 sets the frequency list (mbs-FreqList) in the MII to include the frequencies of interest. Here, the UE 100 includes the frequencies of interest in the frequency list (mbs-FreqList) in descending order of the interest. As identifiers of the frequencies of interest, the frequency list (mbs-FreqList) being set to include the frequencies of interest, absoluteFrequencySSB is used regarding a serving frequency, and ARFCN-ValueNR included in the SIBx1 is used regarding a neighboring frequency.

On the other hand, when there is not frequency information (mbs-SAI-InterFreqList) in the SIBx1, in Step S204, the frequency list (mbs-FreqList) in the MII is set to include the frequencies of interest. Here, the UE 100 includes the frequency identifier (ARFCN-ValueNR) included in the SIB4 (and/or the SIB5) to the frequency list regarding a neighboring frequency. In other words, when the UE 100 recognizes that the neighboring frequency information (and/or MBS service identifiers in neighboring frequencies) is not provided in the SIBx1, the UE 100 sets the frequency list to include the frequency (ARFCN value) broadcast using the SIB4 (and/or the SIB5) out of the frequencies of interest.

Note that the UE 100 may determine whether to perform an operation of setting the frequency list to include the ARFCN value included in the SIB4 and/or the SIB5, based on an indication (or a permission) from the gNB 200. For example, the gNB 200 may notify the UE 100 of information for permitting or indicating the operation of setting the frequency list to include the ARFCN value included in the SIB4 and/or the SIB5, using the SIBx1. Under such an assumption, in response to presence of an indication (or a permission) to use the SIB4 and/or the SIB5 in the SIBx1 instead of the frequency information being not provided in the SIBx1, the UE 100 may set the frequency list to include the frequency (ARFCN value) broadcast using the SIB4 (and/or the SIB5) out of the frequencies of interest.

In response to identifying the frequency of interest using the SIB4 and/or the SIB5 in the operation of identifying the frequency of interest of (4.1) described above instead of the frequency information being not provided in the SIBx1, the UE 100 may set the frequency list to include the frequency (ARFCN value) broadcast using the SIB4 (and/or the SIB5) out of the frequencies of interest.

### (4.3) Configuration Examples of MII

Configuration examples 1 and 2 of the MII according to an embodiment will be described. The UE 100 may transmit the MII having characteristics of the following configuration example 1 or 2 to the serving cell (gNB 200).

### (4.3.1) Configuration Example 1 of MII

In configuration example 1 of the MII, the UE 100 adds an information source identifier indicating based on which piece of information the frequency of interest indicated in the frequency list (mbs-FreqList) is identified and/or set to the list. In other words, when the UE 100 reports the frequency of interest without using the SIBx1, the UE 100 notifies the gNB 200 that the frequency of interest is based on the USD (or that the frequency of interest is based on the SIB4 and/or the SIB5).

As described above, when the frequency list is not identified or set based on the SIBx1, it is considered preferable that the gNB 200 is notified of an information source. For example, when the gNB 200 processes the frequency list of which the gNB is notified by the UE 100, the gNB 200 is enabled to perform different processing depending on the information source.

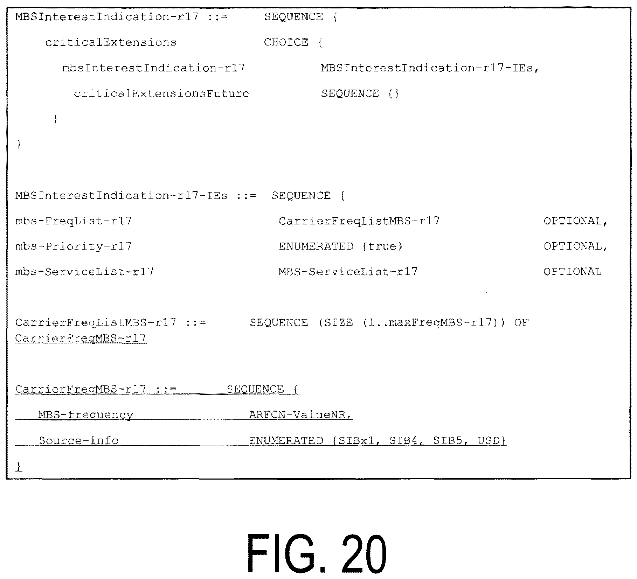

FIG. 20 is a diagram illustrating configuration example 1 of the MII according to an embodiment, that is specifically a specification variation in 3GPP Technical Specification TS 38.331.

The MII includes MBSInterestIndication-r17-IEs. MBSInterestIndication-r17-IEs includes at least one selected from the group consisting of a frequency list (mbs-FreqList-r17) being a list of MBS frequencies that the UE 100 is receiving or is interested in receiving, priority information (mbs-Priority-r17) indicating a priority regarding which is prioritized between reception of all of the listed MBS frequencies and reception of a unicast bearer, and a TMGI list (mbs-ServiceList-r17) being a list of MBS sessions that the UE 100 is receiving or is interested in receiving.

In configuration example 1, each entry (CarrierFreqMBS-r17) of the frequency list (mbs-FreqList-r17) includes MBS-frequency and Source-info. MBS-frequency is a frequency identifier (ARFCN-ValueNR) of the frequency of interest. Source-info is an information source identifier indicating an information source referred to at the time of identifying or setting the frequency list to include the frequency of interest. Source-info indicates at least one selected from the group consisting of the SIBx1, the SIB4, the SIB5, and the USD as the information source. Note that, when there is not Source-info in the MII, the SIBx1 being the information source may be implicitly indicated, the SIB4 and/or the SIB5 being the information source may be implicitly indicated, or the USD being the information source may be implicitly indicated.

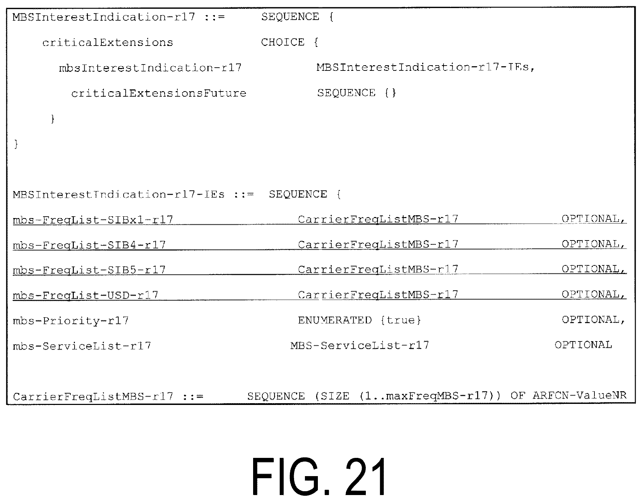

FIG. 21 is a diagram illustrating a variation of configuration example 1 of the MII according to an embodiment, that is specifically a specification variation in 3GPP Technical Specification TS 38.331.

In the present variation, MBSInterestIndication-r17-IEs in the MII can include one of mbs-FreqList-SIB4-r17 being a frequency list of frequencies of interest in which the information source is the SIB4, mbs-FreqList-SIB5-r17 being a frequency list of frequencies of interest in which the information source is the SIB5, or mbs-FreqList-USD-r17 being a frequency list of frequencies of interest in which the information source is the USD, instead of mbs-FreqList-SIBx1-r17 corresponding to an existing frequency list.

When the information source is the SIB4, the UE 100 sets mbs-FreqList-SIB4-r17 to include the frequency of interest, when the information source is the SIB5, the UE 100 sets mbs-FreqList-SIB4-r17 to include the frequency of interest, and when the information source is the USD, the UE 100 sets mbs-FreqList-SIB4-r17 to include the frequency of interest.

Note that the lists of the SIB4 and the SIB5 may be integrated as mbs-RfeqList-SIB4-SIB5-r17, for example.

### (4.3.2) Configuration Example 2 of MII

In configuration example 2 of the MII, the UE 100 classifies each of the frequencies of interest per information source, depending based on which piece of information the frequencies of interest are identified. Then, the UE 100 sets a corresponding list out of lists per information source to include the frequencies of interest. In other words, the UE 100 classifies the frequencies of interest for each information source, includes the frequencies of interest in their corresponding lists, and reports in the MII.

In this manner, regarding all of the frequencies of interest, the UE 100 classifies their information sources and then reports to the network (gNB 200) using the MII. Providing all of the frequencies of interest to the network can prompt the gNB 200 to perform further advanced determination and can contribute to information collection on the network side.

In configuration example 2 of the MII, a configuration of the MII the same as and/or similar to that of FIG. 21 can be employed. The UE 100 subsequently performs processing on the identified frequency of interest. Firstly, the UE 100 includes a frequency that matches the neighboring frequency (ARFCN) provided in the SIBx1 in the frequency list in which the SIBx1 is the information source. Secondly, the UE 100 includes a frequency that matches the neighboring frequency (ARFCN) provided in the SIB4 and/or the SIB5 in the frequency list in which the SIB4 and/or the SIB5 is the information source. Thirdly, the UE 100 includes a frequency that matches the frequency provided in the USD in the frequency list in which the USD is the information source.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow.

In the embodiments and examples described above, an example in which the base station is an NR base station (i.e., a gNB) is described; however, the base station may be an LTE base station (i.e., an eNB) or a 6G base station. The base station may be a relay node such as an Integrated Access and Backhaul (IAB) node. The base station may be a DU of the IAB node. The UE 100 may be a Mobile Termination (MT) of the IAB node.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items." The term "or" used in the present disclosure is not intended to be "exclusive or". In addition, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variations can be made without departing from the scope of the invention as defined by the independent claims.

### Supplementary Note

### Introduction

In RAN2 #116bis-e, the CR being carried out regarding the MBS, the idle/inactive mode procedure, and the RRC is referred to as an assumption of further discussion for completion of a work item. The open issue list extensively covers important problems that are considered to be discussed in electronic mail. However, the problem due to the frequencies of interest of the MBS interest indication is not included in the list, which may adversely affect continuity of broadcast services in partial deployment.

In the present supplementary note, a potential problem related to the frequencies of interest reported in the MBS interest indication will be discussed.

### Discussion

### Deployment Scenario in TS 38.304

In RAN2 #116bis-e, it is agreed upon that whether to use the frequency information of an SIBy or a USD for frequency prioritization in a cell reselection procedure is dependent upon implementation of the UE.

When the SIBy is provided in the cell but frequency mapping of the service is not provided, the UE can preferentially use the frequencies indicated in the USD.

How to use the information in the USD to determine whether to perform (or how to perform) frequency prioritization for a specific frequency/frequency in the USD is dependent upon implementation of the UE (with other explicit knowledge, for example).

Observation 1: Which frequency information of the SIBy or the USD is used for frequency prioritization at the time of cell reselection is dependent upon implementation of the UE.

Thus, in the CR being carried out regarding TS 38.304, conditions for prioritizing the frequencies of interest of the UE, that is, the following 2) and below are captured. In particular, the last condition of 2), that is, "the SIBy is provided in the serving cell but frequency mapping of the service is not provided, and the frequencies are included in the USD of the service", is different from LTE eMBMS.

When the UE capable of MBS broadcast is receiving or is interested in receiving the MBS broadcast services and can perform reception only by camping in the frequency in which the MBS broadcast services are provided, as defined in TS 38.300, the UE can consider that the frequency has the highest priority during an MBS broadcast session, provided that the following two conditions are met.
1) A cell reselected by the UE provides an SIBx based on the frequency priority of the MBS.
   The SIBx is an MBS SIB for carrying a configuration of the MCCH. The term of the SIBx is to be updated later to be consistent with other RAN2 specifications.
2) One of the following:
   one or more IDs (for example, SAIs) of frequencies are indicated in the SIBy of the serving cell, and the same IDs (for example, SAIs) are indicated/indicated regarding the MBS broadcast services in the MBS user service description (USD) defined in TS 26.346, or
   when the SIBy is not provided in the serving cell, and the frequencies are included in the USD of the present service, or
   the SIBy is provided in the serving cell, but the frequency mapping of the service is not provided, and the frequencies are included in the USD of the service.

NOTE: It is up to UE implementation how to use information in USD to determine whether/how to do the frequency prioritization for specific frequency/frequencies included in USD.

According to the last condition (that is, "the SIB is provided in the serving cell, but frequency mapping of the service is not provided, and the frequencies are included in the USD of the service"), a deployment is also assumed in which the gNB does not provide the frequency information in the SIBy (or the SIBx1 in the CR being carried out regarding the RRC), even when the SIBy itself is broadcast.

Observation 2: Even when the SIBy is broadcast, the gNB may not provide the frequency information in the SIBy.

Possibility of Problem of Service Continuity in RRC Connected

Regarding the connected UE, the gNB secures continuity of the broadcast services, with the MBS interest indication transmitted from the UE being taken into consideration. The MBS interest indication may include three pieces of information, i.e., frequencies of interest, services of interest, and priority between unicast and broadcast, as alternatives.

In the CR being currently carried out, a method for the UE to determine the frequencies of interest included in the MBS interest indication is captured as follows (this is substantially the same as in LTE eMBMS).

### 5.x.4.3 Determination of MBS Frequencies of Interest

The UE performs the following:
1> When the following condition is met, consider the frequency as a part of the MBS frequencies of interest.
   2> At least one MBS session that the UE is receiving or is interested in receiving via the broadcast MRB is ongoing or is to be started, and
      Note 1: With reference to TS 38.300 or TS 23.247, the UE can determine whether the session is ongoing, based on the start time and the stop time indicated in the User Service Description (USD).
   2> Regarding the SIBx1 for at least one of these MBS sessions acquired from the PCell, include one or more MBS SAIs indicated in the USD of the session in the frequency, and
      Note 2: Even when NG-RAN does not (temporarily) use the broadcast MRB of the session, the UE considers the frequency as a part of the target MBS frequencies (that is, the UE does not check whether the session is indicated on the MCCH).
   2> supportedBandCombination of the UE included in UE-NR-Capability includes at least one combination of bands including a set of MBS frequencies of interest (that is, the UE can simultaneously receive the broadcast MRB in the set of MBS frequencies of interest).

Note 3: When the UE evaluates whether the broadcast MRB can be simultaneously received in the set of MBS frequencies of interest, the UE does not consider the currently configured serving frequency. In other words, the UE considers only the MBS frequencies that the UE is interested in receiving, regardless of whether the MBS frequencies can be received together with the current serving cell.

Note: The term of USD/SAI is to be consistent with SA2 specifications after being updated.

The UE can determine the frequencies of interest, only when all of the conditions (that is, the above three parts of "2>") are met. Regarding the second condition in particular (that is, "regarding at least one of these MBS sessions, the SIBx1 acquired from the PCell includes one or more MBS SAIs indicated in the USD of the session(s) regarding the frequency"), the SIBx1 (or the SIBy) needs to provide the MBS SAI regarding the frequency.

Observation 3: When the SAI of the frequency is provided in the SIBx1, the UE is permitted to determine the frequency of interest reported in the MBS interest indication.

Details of the SAI of an NR MBS, although being undetermined, are assumed to be the same as and/or similar to those of an SIB15 of LTE eMBMS, and are captured as in FIG. 11 in the CR already being carried out.

In a manner the same as and/or similar to LTE eMBMS, an SAI list is prepared for both of an intra-frequency and an inter-frequency. Needless to say, regarding the inter-frequency ("mbs-SAI-InterFreqList-r17" including "dl-CarrierFreq-r17" and "mbs-SAI-List-r17"), the SAI list is associated with a DL carrier frequency (so-called "frequency information").

With observation 2 above being taken into consideration, the gNB not providing the frequency information is permitted in a part of deployment, and this means that the gNB does not provide the SAI list of the frequency.

Observation 4: When the gNB does not provide the frequency information, in a manner the same as and/or similar to observation 2, the gNB does not provide the SAI list of different frequencies.

In this case, the UE cannot consider that the frequency is the frequency of interest, and thus cannot report in the MBS interest indication as in observation 3 above. This means that broadcast service continuity in the frequency is not considered in the gNB.

Observation 5: When the UE does not provide the SAI list in the SIBx1 as in observation 4, the UE cannot determine the frequency of interest of the MBS interest indication as in observation 3.

While when the SIBx1 (or the SIBy) does not provide the SAI list (or does not provide the frequency information) as in observation 5, the connected UE cannot use the frequency information of the USD for the MBS interest indication, when the SIBy (or the SIBx1) does not provide the frequency information (or the SAI list is not present) as in observation 1, it is slightly strange that the idle/inactive UE can use the frequencies in the USD for cell reselection. In other words, in the deployment scenario, broadcast service continuity is secured for the idle/inactive UE, but is not secured for the connected UE.

Observation 6: In a part of deployment, broadcast service continuity is not secured for the connected UE based on observation 5, whereas the continuity is secured for the idle/inactive UE based on observation 1.

In light of the above observation, in RAN2, whether handling of the frequency information in the USD is required to be consistent between cell reselection and the MBS interest indication needs to be discussed. If consistency is required, some solutions can be studied as follows.

Alternative 1: The condition that "regarding at least one of these MBS sessions, the SIBx1 acquired from the PCell includes one or more MBS SAIs regarding the frequency as indicated in the USD of the session(s)" is deleted.

Alternative 2: After the condition that "or when the frequency of the MBS session available in the SIBx1 is not present, the frequency may be determined using the USD", an additional condition that "the SIBx1 acquired from the PCell regarding at least one of these MBS sessions includes one or a plurality of MBS SAIs regarding the frequency as indicated in the USD of the session(s)" is provided.

In both of the alternatives, the UE can determine the frequency of interest, and thus broadcast service continuity is secured in all of the deployment scenarios (when being reported in the MBS interest indication).

Proposal 1: In RAN2, even when the frequencies are not provided in the SIBx1, whether the UE can include the frequencies of the USD in the MBS interest indication needs to be discussed in a manner the same as and/or similar to the frequency prioritization in cell reselection.

Proposal 2: When proposal 1 is agreed upon, in RAN2, whether to delete the sentence "2> Regarding at least one of these MBS sessions, the SIBx1 acquired from the PCell includes one or more MBS SAIs of the frequency indicated in the USD in the session(s)" by employing alternative 1 and whether to add the condition "or when the frequency of the MBS session available in the SIBx1 is not present, the frequency may be determined using the USD" in Section 5.x.4.3 of the CR being carried out regarding TS 38.331 by employing alternative 2 are further discussed.

Another related problem lies in "configuration of contents of MBS interest indication" in Section 5.x.4.5 of the CR being currently carried out, and the procedure is extremely similar to that of LTE eMBMS.

### 5.x.4.5 Configuration of Contents of MBS Interest Indication

The UE configures the contents of the MBS interest indication as follows.
1> When a set of MBS frequencies of interest determined according to 5.x.4.3 is not empty:
   2> Include mbs-FreqList, and in that case, include the MBS frequencies of interest arranged in ascending order, using absoluteFrequencySSB of the serving frequency and ARFCN-ValueNR (for neighboring frequencies) included in the SIBx1.

As in the description "ARFCN-ValueNR (for neighboring frequencies) included in the SIBx1", when the gNB does not provide the frequency information in the SIBx1, and even if the UE has determined the frequencies of interest, the frequencies of interest cannot be included in the MBS interest indication (due to proposal 2 and the like).

Observation 7: When the gNB does not provide the frequency information in the SIBx1, and even if the UE has determined the frequencies of interest of the UE, the frequencies of interest are not included.

When proposal 1 above is agreed upon, the following three alternatives are studied to solve the problem.

Alternative A: The description "ARFCN-ValueNR (for neighboring frequencies) included in the SIBx1" is deleted.

Alternative B: An alternative condition "include mbs-FreqList of the MBS session of interest from the USD" is changed to the description "ARFCN-ValueNR (for neighboring frequencies) included in the SIBx1".

Alternative C: An alternative condition of describing the ARFCN in the SIB4 (NR inter-frequency) and/or the SIB5 (Inter-RAT inter-frequency) instead of the SIBx1 is employed.

In any of the alternatives, the UE can report target frequencies, regardless of whether the gNB can provide the frequency information in the SIBx1. Thus, broadcast service continuity is ensured in all of introduced scenarios.

Proposal 3: When proposal 1 is agreed, in RAN2, whether to delete the description "ARFCN-ValueNR (for neighboring frequencies) included in the SIBx1" by employing alternative A, whether to add the alternative condition "include mbs-FreqList of the MBS session of interest from the USD" by employing alternative B, and whether to add the alternative condition of referring to the ARFCN using the SIB4 and the SIB5 to 5.x.4.3 of the CR being carried out regarding TS 38.331 by employing alternative C are further discussed.

### REFERENCE SIGNS

1: Mobile communication system
10: RAN
20: CN
100: UE
110: Receiver
120: Transmitter
130: Controller
200: gNB
210: Transmitter
220: Receiver
230: Controller
240: Backhaul communicator

## Claims

1. A communication method performed by a user equipment (100) in a mobile communication system (1) for providing multicast broadcast services MBS, the communication method comprising the steps of:
receiving, from a serving cell (200), a predetermined system information block SIB that comprise information indicating a correspondence relationship between an identifier of an MBS area and a frequency;
generating an MBS interest indication comprising a list indicating a frequency of interest being an MBS frequency that a user equipment (100) is receiving or is interested in receiving; and
transmitting the MBS interest indication to the serving cell (200),
wherein the generating includes including the frequency of interest in the list when the frequency of interest is indicated in a User Service Description USD, even when the predetermined SIB does not comprise the frequency of interest.

2. The communication method according to claim 1, wherein
the USD comprising the identifier of the MBS service, information indicating a service area in which the MBS service is provided, and the frequency for providing the MBS service.

3. The communication method according to claim 1, wherein
the predetermined SIB comprises information indicating a correspondence relationship between the identifier of the MBS service and an inter-frequency being the frequency for providing the MBS service and being different from the frequency of the serving cell (200).

4. The communication method according to claim 1, wherein
the generating comprises setting the list to include all of MBS frequencies of interest identified based on the USD.

5. A user equipment (100) used in a mobile communication system (1) for providing multicast broadcast services MBS, the user equipment (100) comprising:
a receiver (110) configured to receive, from a serving cell (200), a predetermined system information block SIB that comprise information indicating a correspondence relationship between an identifier of an MBS area and a frequency;
a controller (130) configured to generate an MBS interest indication comprising a list indicating a frequency of interest being an MBS frequency that a user equipment (100) is receiving or is interested in receiving; and
a transmitter (120) configured to transmit the MBS interest indication to the serving cell (200),
wherein the controller (130) is configured to include the frequency of interest in the list when the frequency of interest is indicated in a User Service Description USD, even when the predetermined SIB does not comprise the frequency of interest.

6. A chipset comprising means that, when the chipset is comprised within a user equipment, cause the user equipment (100) to perform the method of claim 1.

7. A computer program comprising instructions that, when the program is executed by a user equipment (100), cause the user equipment (100) to carry out the method of claim 1.

8. A mobile communication system (1) for providing multicast broadcast services MBS comprising:
a user equipment (100) configured to:
receive, from a serving cell (200), a predetermined system information block SIB that comprise information indicating a correspondence relationship between an identifier of an MBS area and a frequency;
generate an MBS interest indication comprising a list indicating a frequency of interest being an MBS frequency that a user equipment (100) is receiving or is interested in receiving;
transmit the MBS interest indication to the serving cell (200); and
include the frequency of interest in the list when the frequency of interest is indicated in a User Service Description USD, even when the predetermined SIB does not comprise the frequency of interest.

## Patentansprüche

1. Kommunikationsverfahren, das von einer Benutzereinrichtung (100) in einem Mobilkommunikationssystem (1) zum Bereitstellen von Multicast-Broadcast-Diensten MBS ausgeführt wird, wobei das Kommunikationsverfahren die folgenden Schritte aufweist:
Empfangen, von einer bedienenden Zelle (200), eines vorbestimmten Systeminformationsblocks SIB, aufweisend Informationen, die eine Entsprechungsbeziehung zwischen einer Kennung eines MBS-Bereichs und einer Frequenz angeben;
Erzeugen einer MBS-Interessensangabe, aufweisend eine Liste, welche eine Frequenz von Interesse angibt, die eine MBS-Frequenz ist, die eine Benutzereinrichtung (100) empfängt oder an deren Empfang sie interessiert ist; und
Senden der MBS-Interessensangabe an die bedienende Zelle (200),
wobei das Erzeugen das Aufnehmen der Frequenz von Interesse in die Liste aufweist, wenn die Frequenz von Interesse in einer Benutzerdienstbeschreibung USD angegeben ist, selbst wenn der vorbestimmte SIB die Frequenz von Interesse nicht aufweist.

2. Kommunikationsverfahren gemäß Anspruch 1, wobei
die USD die Kennung des MBS-Dienstes, Informationen, die einen Dienstbereich angeben, in dem der MBS-Dienst bereitgestellt wird, und die Frequenz zum Bereitstellen des MBS-Dienstes aufweist.

3. Kommunikationsverfahren gemäß Anspruch 1, wobei
der vorbestimmte SIB Informationen aufweist, die eine Entsprechungsbeziehung zwischen der Kennung des MBS-Dienstes und einer Zwischenfrequenz angeben, die die Frequenz zum Bereitstellen des MBS-Dienstes ist und von der Frequenz der bedienenden Zelle (200) verschieden ist.

4. Kommunikationsverfahren gemäß Anspruch 1, wobei
das Erzeugen das Setzen der Liste aufweist, um alle MBS-Frequenzen von Interesse zu enthalten, die basierend auf der USD identifiziert werden.

5. Benutzereinrichtung (100), die in einem Mobilkommunikationssystem (1) zum Bereitstellen von Multicast-Broadcast-Diensten MBS verwendet wird, wobei die Benutzereinrichtung (100) aufweist:
einen Empfänger (110), der konfiguriert ist, um von einer bedienenden Zelle (200) einen vorbestimmten Systeminformationsblock SIB zu empfangen, aufweisend Informationen, die eine Entsprechungsbeziehung zwischen einer Kennung eines MBS-Bereichs und einer Frequenz angeben;
eine Steuereinrichtung (130), die konfiguriert ist, um eine MBS-Interessensangabe zu erzeugen, die eine Liste aufweist, welche eine Frequenz von Interesse angibt, die eine MBS-Frequenz ist, die eine Benutzereinrichtung (100) empfängt oder an deren Empfang sie interessiert ist; und
einen Sender (120), der konfiguriert ist, um die MBS-Interessensangabe an die bedienende Zelle (200) zu senden,
wobei die Steuereinrichtung (130) konfiguriert ist, um die Frequenz von Interesse in die Liste aufzunehmen, wenn die Frequenz von Interesse in einer Benutzerdienstbeschreibung USD angegeben ist, selbst wenn der vorbestimmte SIB die Frequenz von Interesse nicht aufweist.

6. Chipsatz, der Mittel aufweist, die, wenn der Chipsatz in einer Benutzereinrichtung enthalten ist, bewirken, dass die Benutzereinrichtung (100) das Verfahren gemäß Anspruch 1 ausführt.

7. Computerprogramm, das Anweisungen aufweist, die, wenn das Programm von einer Benutzereinrichtung (100) ausgeführt wird, bewirken, dass die Benutzereinrichtung (100) das Verfahren gemäß Anspruch 1 ausführt.

8. Mobilkommunikationssystem (1) zum Bereitstellen von Multicast-Broadcast-Diensten MBS, aufweisend:
eine Benutzereinrichtung (100), die konfiguriert ist, um:
von einer bedienenden Zelle (200) einen vorbestimmten Systeminformationsblock SIB zu empfangen, aufweisend Informationen, die eine Entsprechungsbeziehung zwischen einer Kennung eines MBS-Bereichs und einer Frequenz angeben;
eine MBS-Interessensangabe zu erzeugen, aufweisend eine Liste, welche eine Frequenz von Interesse angibt, die eine MBS-Frequenz ist, die eine Benutzereinrichtung (100) empfängt oder an deren Empfang sie interessiert ist;
die MBS-Interessensangabe an die bedienende Zelle (200) zu senden und
die Frequenz von Interesse in die Liste aufzunehmen, wenn die Frequenz von Interesse in einer Benutzerdienstbeschreibung USD angegeben ist, selbst wenn der vorbestimmte SIB die Frequenz von Interesse nicht aufweist.

## Revendications

1. Procédé de communication mis en œuvre par un équipement utilisateur (100) dans un système de communication mobile (1) pour fournir des services de diffusion multicast MBS, le procédé de communication comprenant les étapes suivantes consistant à :
recevoir, depuis une cellule de desserte (200), un bloc d'informations système SIB prédéterminé comprenant des informations indiquant une relation de correspondance entre un identifiant d'une zone MBS et une fréquence ;
générer une indication d'intérêt MBS comprenant une liste indiquant une fréquence d'intérêt qui est une fréquence MBS qu'un équipement utilisateur (100) reçoit ou souhaite recevoir ; et
transmettre l'indication d'intérêt MBS à la cellule de desserte (200),
dans lequel la génération comprend l'inclusion de la fréquence d'intérêt dans la liste lorsque la fréquence d'intérêt est indiquée dans une description de service utilisateur USD, même lorsque le SIB prédéterminé ne comprend pas la fréquence d'intérêt.

2. Procédé de communication selon la revendication 1, dans lequel
l'USD comprend l'identifiant du service MBS, des informations indiquant une zone de service dans laquelle le service MBS est fourni, et la fréquence pour fournir le service MBS.

3. Procédé de communication selon la revendication 1, dans lequel
le SIB prédéterminé comprend des informations indiquant une relation de correspondance entre l'identifiant du service MBS et une fréquence intermédiaire qui est la fréquence pour fournir le service MBS et qui est différente de la fréquence de la cellule de desserte (200).

4. Procédé de communication selon la revendication 1, dans lequel
la génération comprend la configuration de la liste pour qu'elle inclue toutes les fréquences MBS d'intérêt identifiées sur la base de l'USD.

5. Équipement utilisateur (100) utilisé dans un système de communication mobile (1) pour fournir des services de diffusion multicast MBS, l'équipement utilisateur (100) comprenant :
un récepteur (110) configuré pour recevoir, depuis une cellule de desserte (200), un bloc d'informations système SIB prédéterminé comprenant des informations indiquant une relation de correspondance entre un identifiant d'une zone MBS et une fréquence ;
un contrôleur (130) configuré pour générer une indication d'intérêt MBS comprenant une liste indiquant une fréquence d'intérêt qui est une fréquence MBS qu'un équipement utilisateur (100) reçoit ou souhaite recevoir ; et
un transmetteur (120) configuré pour transmettre l'indication d'intérêt MBS à la cellule de desserte (200),
dans lequel le contrôleur (130) est configuré pour inclure la fréquence d'intérêt dans la liste lorsque la fréquence d'intérêt est indiquée dans une description de service utilisateur USD) même lorsque le SIB prédéterminé ne comprend pas la fréquence d'intérêt.

6. Chipset comprenant des moyens qui, lorsque le chipset est intégré à un équipement utilisateur, amènent l'équipement utilisateur (100) à mettre en œuvre le procédé selon la revendication 1.

7. Programme informatique comprenant des instructions qui, lorsque le programme est exécuté par un équipement utilisateur (100), amènent l'équipement utilisateur (100) à mettre en œuvre le procédé selon la revendication 1.

8. Système de communication mobile (1) pour fournir des services de diffusion multicast MBS, comprenant :
un équipement utilisateur (100) configuré pour :
recevoir, depuis une cellule de desserte (200), un bloc d'informations système SIB prédéterminé comprenant des informations indiquant une relation de correspondance entre un identifiant d'une zone MBS et une fréquence ;
générer une indication d'intérêt MBS comprenant une liste indiquant une fréquence d'intérêt qui est une fréquence MBS qu'un équipement utilisateur (100) reçoit ou souhaite recevoir ;
transmettre l'indication d'intérêt MBS à la cellule de desserte (200) ; et
inclure la fréquence d'intérêt dans la liste lorsque la fréquence d'intérêt est indiquée dans une description de service utilisateur USD, même lorsque le SIB prédéterminé ne comprend pas la fréquence d'intérêt.
